Europäisches Patentamt

(19) European Patent Office

Office européen des brevets

(11) Publication number: **0 187 875**
**A1**

## (12) EUROPEAN PATENT APPLICATION

(21) Application number: **85100018.2**

(22) Date of filing: **02.01.85**

(51) Int. Cl.⁴: **G 01 D 5/34**
**G 01 D 5/26**

(43) Date of publication of application:
**23.07.86 Bulletin 86/30**

(84) Designated Contracting States:
**DE FR GB SE**

(71) Applicant: **ITALORA S.p.A.**
**Strada 4 Palazzo q5**
**I-20089 Rozzano Milanofiori(IT)**

(72) Inventor: **Negri, Emilio**
**Via Trenno, 136**
**I-20100 Milan(IT)**

(74) Representative: **Dr. Ing. A. Racheli & C.**
**Viale San Michele del Carso, 4**
**I-20144 Milano(IT)**

(54) A digital transducer.

(57) A digital transducer, which can be engaged with a rotary
or rotating shaft comprises a rotating sector (16) provided
with apertures or perforations (16a) arranged according to
arcs on different radiuses, having predetermined angular
extension according to a binary code with a selected number
of components corresponding to the number of bands of
apertures on the different radiuses, information areas being
defined for each aperture set positioned on different radiuses
included in a predetermined angle.

It advantageously provides, in an area adjacent to the
information areas, a set of auxiliary apertures or slots (30)
arranged according to arcs with the same angular extension,
all aligned on the same angle, an aperture being provided at
each information band.

FIG.5

EP 0 187 875 A1

Applicant:

ITALORA S.p.A.

IT - 20089 ROZZANO MILANOFIORI

Strada 4 Palazzo q5


"A DIGITAL TRANSDUCER"


This invention relates to a rotary digital transducer, that is a device usually referred to as encoder, which supplies the absolute angular position of a rotary body, being this position sensed by photodetectors responsive to light emitted by LED (light emitter diodes) which selectively appears and disappears from slits provided on a rotary or rotating sector.

As well known, such transducers suffer from the disadvantage of having to be calibrated by suitable devices which make the response of each sensor consistent with the law according to which the apertures have been made in the angular sector. This calibration, which is normally very time consuming, is one of the elements causing a relevant increase in the transducer cost.

It is another disadvantage that the conventional construction of the transducer provides also for a self-supporting container. Therefore, this obliges the assembling of the whole apparatus within said container.

It is a further disadvantage that a positive positioning between the collimator and the perforated rotating sector is difficult.

The EP-A-0 028 138 describes a digital angular transducer, apt to be mounted on a rotating shaft, which comprises a rotary or rotating sector provided with apertures or perforations arranged according to arcs on different radiuses, with a predetermined angular extension according to a selected binary code having a number of components corresponding to the number of bands of apertures provided on different radiuses. In this way information areas are defined for each set of apertures positioned on different radiuses, included in a predetermined angle.

This transducer does not have any sector suitably arranged for the calibration in order to match the response of each sensor with the law according to which the apertures have been made. In particular all the perforations are used for the coding, none for the initial calibration operation, which is always necessary in particular in the high level precision transducers. Furthermore the calibration process of this transducer is not described at all in the document.

It is the primary object of the present invention to provide a transducer, in which the calibration time is extremely reduced with respect to the time presently required.

**0187875**

It is another object of the present invention to provide a transducer, in which the assembling times are much less than those at present required.

The primary object has been achieved by providing on the perforated sector, at a zone not involved by the usual perforations, a series of radially arranged slots, all of which have a same angular excursion, each of them being arranged at each information portion.

An advantage which is obtained by positioning a set of auxiliary arranged slots is that, an operation check can be carried out in any desired moment, that is during the use or when the instrument accommodating the transducer is switched on.

In fact by providing said set of auxiliary apertures in a position corresponding to LEDs and photodetector, it is possible to check their efficiency and to signal every malfunction.

It is also provided that the transducer is pack mounted, separately from its own containing box, that is the rotating sector carrying shaft is inserted in a supporting plate provided with hub and capable of receiving and centering the collimator, said carrying shaft being centered within the plate hub, then the whole is closed by a pressure crown or rim, two printed circuits being provided as mounted one outside of the carrying plate, and the other outside of the pressure crown or rim.

A further improvement provides that the carrying plate includes a projection concentric to the hub, which provides the positioning of the rotating sector with respect to the collimator disc.

The invention will now be further explained with reference to some exemplary embodiments that have been shown in the accompanying drawings, in which:

Fig. 1 is a sectional view of a transducer according to the present invention;

Fig. 2 is a view showing a detail of Fig. 1;

Figs. 3 and 4 are views similar to Fig. 1, showing possible changes to the embodiment of Fig. 1; and

Fig. 5 is a view of a rotating sector.

The transducer, denoted as a whole at 10, comprises a carrying plate 11 provided with a hub 12. It has a centering seat 13, in which the collimator 14 is received, providing the concentricity thereof with the axis of shaft 18 carrying the rotating sector 16. The angular position of the collimator 14 is defined by a pin 28, providing the exact position of the collimating slots at the photodetectors 26.

The plate 11 is provided with a lug or projection 15, having the rotating perforated sector 16 bearing thereon, and which is keyed on a rotary shaft 18 made integral therewith by a small plate 17 connected to said shaft 18 by means of rivets 19. Said shaft 18 is centered in the carrying plate 11 through a single long bush 20 inserted in said hub 12, which is sufficient to endure the radial loads. The axial distance between said collimator 14 and rotating sector 16 is defined by said lug or projection 15. The collimator 14 is kept in place by the pressure crown or rim 21, which is provided with a threaded dowel 22 to adjust the pressure being exerted by the crown or rim on shaft 18.

The pressure crown or rim 21 also clamps said collimator and its peripheral portion. It also serves as a support for the printed circuit 23 comprising the LEDs 24.

On the opposite outer wall, said carrying plate 11 supports a further printed circuit 25 comprising the photodetectors 26, connector 27 and further known electronic material.

Thus, the whole is completely self-bearing and also able to operate. Therefore, calibrations and other operating tests can be effected thereon.

As a protection against any environmental factors, the assembly 10 thus provided may be enclosed within a box 29 with cover 33.

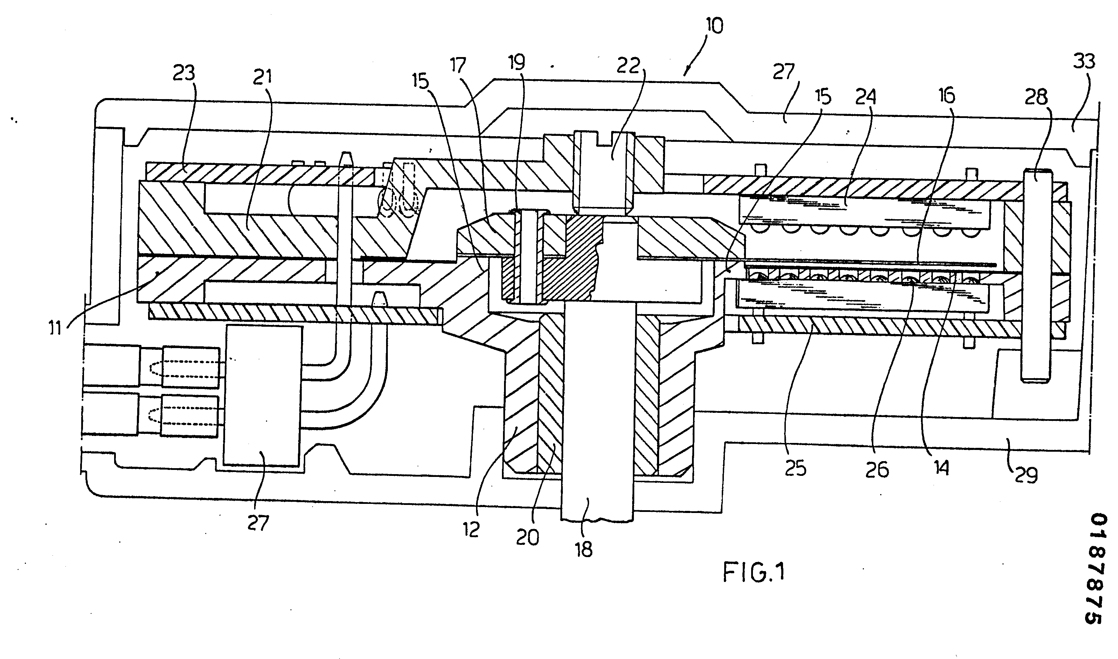

Said sector 16 (Fig. 1 and 5), in addition to usual transduction perforations 16a, is also provided with a set of apertures 30 in a same number as said LEDs and photodetectors. They are of same angular dimensions, and accordingly increasing actual dimensions from center to periphery. Thus, it is possible to provide for calibration of the photodetector by only checking the simultaneous response thereof at the calibrating slots. In this case, it is only required to continuously displace the sector by a very small angle, varying the calibration resistance of the photodetectors until the latter will all together match or react both to light and shadow produced by the series of calibrating apertures 30, which are all perfectly coincident in angular direction.

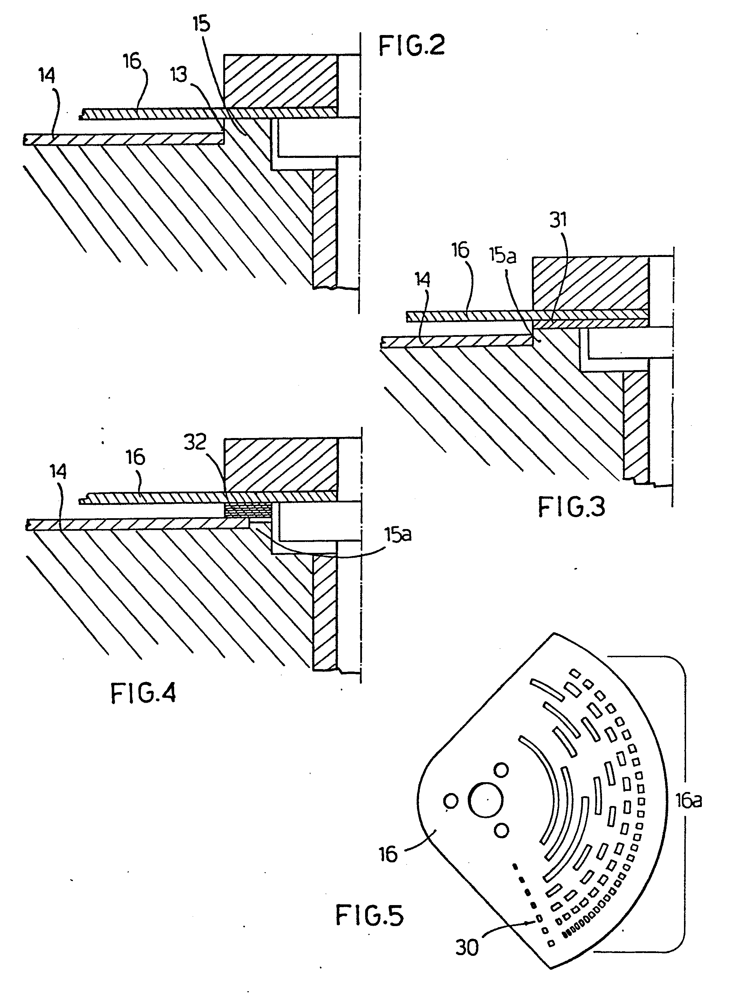

Fig. 3 is similar to Fig. 2, but therein an antifriction ring 31 is interposed between said sector 16 and lug or projection 15a.

Another solution is shown in Fig. 4, according to which the distance or spacing between said collimator 14 and rotating sector 16 is defined by an antifriction ring 32 having the desired height.

Said collimator 14 and sector 16 may be made in different ways. For example, instead of being of cutout metal, as herein assumed, they may comprise transparent material made opaque by a photosensitive layer, some zones of which are removed by photographic process, thus creating transparent zones for light passage.

Other methods for dulling of a transparent material are provided by vacuum metal depositing, or by a screening process or by paint deposit by a silk screen.

ITALORA S.p.A.

IT - 20089 ROZZANO MILANOFIORI

C L A I M S

1.      A digital transducer, which can be mounted on a rotary or rotating shaft (18) comprising a rotating sector (16) provided with apertures or perforations (16a) arranged according to arcs on different radiuses, having predetermined angular extension according to a binary code with a selected number of components corresponding to the number of bands of apertures on the different radiuses, information areas being defined for each aperture set positioned on different radiuses included in a predetermined angle characterized by comprising in an area adjacent to the information areas, a set of auxiliary apertures or slots (30) arranged according to arcs with the same angular extension, all aligned on the same angle, an aperture being provided at each information band.

2.      A transducer as claimed in Claim 1, characterized by being pack mounted, separately from its own containing box (29, 33), that is the shaft (18) carrying the rotating sector (16) is inserted in a carrying plate (11) provided with a hub (12) and suitable to receive and center the collimator (14), said shaft being centered within the plate hub, then the whole is closed by a pressure crown or rim (21), two printed circuits being provided as mounted one (25) outside the carrying plate (11) and the other (23) outside the pressure crown or rim (21).

3.      A transducer as claimed in Claim 2, characterized in that said carrying plate (11) comprises a lug or projection (15) concentric with said hub (12), the side wall of which acts as a centering seat (13) for said collimator (14), whereas the height thereof defines the distance or spacing between said rotating sector (16) and collimator (14).

4.      A transducer as claimed in Claim 3, characterized in that said lug or projection (15) at least partly comprises antifriction material.

5.      A transducer as claimed in Claim 2, characterized in that said lug or projection (15a) serves only to define the centering of said collimator (14), while the distance or spacing between the latter and said rotating sector (16) is defined by a spacer or thickness (32), particularly of antifriction material.

FIG.1

0187875

1/2

FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | US-A-4 086 488 (J.J. HILL) * Figures 2,3,5,6; column 2, lines 45-60; column 4, line 11-column 5, line 58; column 6, lines 6-23 * | 1 | G 01 D 5/34 G 01 D 5/26 |
| X | EP-A-0 028 138 (MATSUSHITA ELECTRIC INDUSTRIAL) * Introduction; figures 4,5; page 11, paragraph 2 - page 12, paragraph 1 * | 1 | |
| Y | FR-A-2 457 477 (ROBERT BOSCH) * Figures 1,2; page 2, line 35 - page 3, line 2; page 3, line 12 - page 4, line 18 * | 2-5 | |
| Y | US-A-3 728 551 (I.H. CULVER et al.) * Figures 2,3; column 5, line 53 - column 7, line 12 * | 2-5 | TECHNICAL FIELDS SEARCHED (Int. Cl.4) G 01 D 5/00 |
| A | GB-A-2 038 578 (THE PLESSEY CO.) * Figure 3; entity of the description * | 1 | |

The present search report has been drawn up for all claims

| Place of search | Date of completion of the search | Examiner |
|---|---|---|
| THE HAGUE | 02-09-1985 | VISSER F.P.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82